# EUROPEAN PATENT SPECIFICATION

(11) **EP 2 071 752 B1**
(45) Date of publication and mention of the grant of the patent: **16.11.2011**
(21) Application number: 07816956.2
(22) Date of filing: 25.09.2007
(51) Int. Cl.: H04J 14/00, H04B 10/12, H04L 27/26

(54) **METHOD AND SYSTEM FOR DATA TRANSMISSION**
VERFAHREN UND SYSTEM ZUR DATEN-ÜBERTRAGUNG
PROCÉDÉ ET SYSTÈME DE TRANSMISSION DE DONNÉES

(30) Priority: 30.09.2006 CN 200610063015
(43) Date of publication of application: 17.06.2009
(73) Proprietor: Huawei Technologies Co., Ltd., Shenzhen, Guangdong Province 518129 (CN)
(72) Inventor: JIANG, Tao, Shenzhen Guangdong 518129 (CN); YU, Fan, Shenzhen Guangdong 518129 (CN); YI, Yongjiang, Shenzhen Guangdong 518129 (CN); OU, Peng, Shenzhen Guangdong 518129 (CN)
(74) Representative: Gulde Hengelhaupt Ziebig & Schneider
(86) International application number: PCT/CN2007/070765
(87) International publication number: WO 2008/049357

(56) References cited:
- EP-A- 1 271 996
- WO-A-01/28164
- CN-A- 1 346 577
- CN-A- 1 440 143
- CN-A- 1 614 919
- CN-A- 1 701 542
- CN-A- 1 819 500
- CN-A- 1 913 650
- JP-A- 2002 165 237
- US-A1- 2002 073 434
- US-A1- 2006 188 259
- US-B1- 6 804 226

## Description

The present application claims the priority of the Chinese application with the application number 200610063015.8, filed with SIPO on Sep 30, 2006, entitled "METHOD AND SYSTEM OF DATA TRANSMISSION".

### FIELD OF THE INVENTION

The present invention relates to communication field, and more particularly, to methods and systems of data transmission.

### BACKGROUND

Digital Subscriber Line (xDSL) is a high speed data transmission technique using Telephone Twisted Pair, (also called Unshielded Twisted Pair, UTP). Except for ISDN Digital Subscriber Line (IDSL) and Single-pair High-bit-rate Digital Subscriber Line (SHDSL) that using baseband to transmit a DSL service, the xDSL using passband transmission coexists with Plain Old Telephone Service (POTS) on a same Twisted Pair by utilizing Frequency Division Multiplex technique. The xDSL occupies the high frequency band and POTS occupies the baseband that is lower than 4KHz. The xDSL using passband transmission is implemented by Discrete Multitone Modulation (DMT) technique.

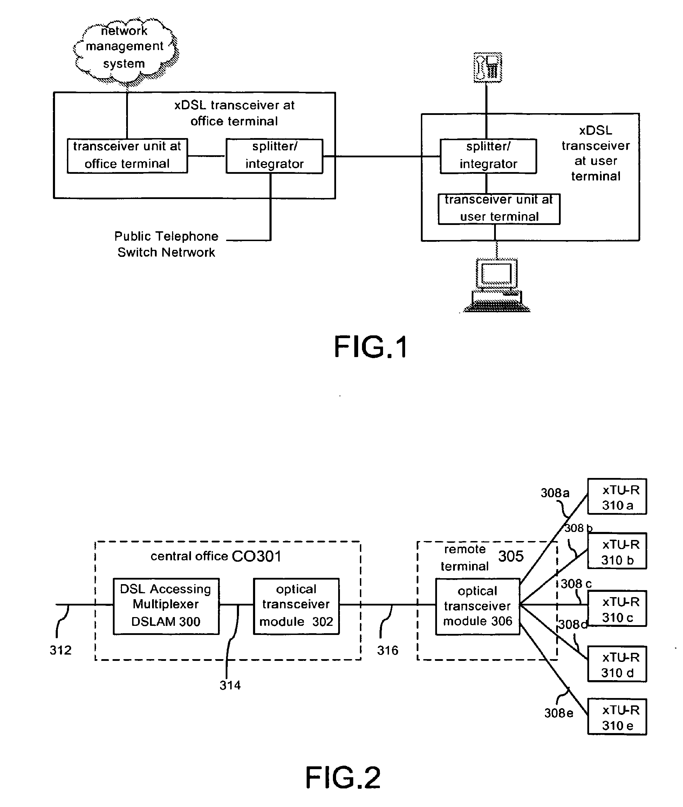

As shown in Fig 1, it is a reference model of an xDSL system, POTS signals and xDSL signals transmitted on Twisted Pair are separated by a Splitter, and a system providing multiplex xDSL access is called DSL Access Multiplexer (DSLAM).

Twisted Pair is designed for audio signals whose bandwidth is less than 4kHz, and thus transmission bandwidth of Twisted Pair is limited. Attenuation of signals transmitted on Twist Pair is more serious with the increase of its frequency. Asymmetrical Digital Subscriber Line (ADSL) expands the transmission frequency of Twisted Pair to be about IMHZ. With the increasing demands on access bandwidth, new xDSL techniques, such as Very-high-bit-rate Digital Subscriber Line (VDSL2), use a bandwidth up to 30MHz on Twisted Pair. Though access rate is increased, valid access range is decreased to less than 1km.

Currently, xDSL techniques based on Orthogonal Frequency Division Multiplexing (OFDM) technique become more and more mature, and has approaching THE Shannon Limit under various circumstances. That is, if Twisted Pair access technique is still directly used for transmitting xDSL signals from an office terminal to a user terminal, a compromise needs to be made between access bandwidth and access range, the best accessing bandwidth and the best accessing range can not be ensured simultaneously.

In view of the above reasons, a method of utilizing fibers to increase the access range is proposed in the industry. Such a method can sufficiently exercise advantages of the mature access technique, xDSL. As shown in Fig 2, on downstream direction, a DSLAM 300 located at a Central Office CO301 receives information from a high speed data communication network (such as Internet) through a link 312. Analogue signals are generated at the DSLAM, the analogue data includes information to be delivered to xDSL subscribers. Multiplex data come from the DSLAM are multiplexed and converted to optical signals by an optical transceiver module 302, and be transmitted to a remote terminal 305 through a fiber 316. At remote terminal the received signals from fiber are optical-electrically converted and de-multiplexed into multiplex xDSL signals by an optical transceiver 306, and then the restored xDSL signals are transmitted to a corresponding xDSL user terminal 310a-310e through Twist Pairs 308a-308e. In the upslink direction, signals are transmitted according to a reverse order of the process mentioned above.

Furthermore, demands of the market also promote the development of wireless techniques. A wireless service transmission with a higher bandwidth, longer transmission distance and simpler base structure is required, so that basic construction cost and maintenance cost can be reduced. Large capacity fibers can also be used to carry wireless services so as to extend the transmission distance.

Nowadays, cost of an optical transceiver system is still high. If a same optical transmission device can be shared for providing both xDSL services and wireless services to subscribers, cost of the whole system will be dramatically decreased, and subscribers may benefit from various services with a relatively low price.
Patent application No. EP 1 271 996 discloses a solution that plural digital signals are modulated into DSL signals with different frequencies, then combined together and transmitted via an optical fibre.
Patent application No. WO O1/28164 discloses a system for communication with multiple devices over a shared communication link within a customer premise and how to transmit a signal in an external network, wherein the signal is obtained by mixing multiple services signals (such as telephone voice service, POT, IP, DSL and so forth).
Patent application No. US 2002/073434 discloses a broadband communications network interface unit, which permits multiple services being provided to a subscriber to be combined and provided, supported and controlled collectively by the network interface unit.
Patent application No. US 6804226 discloses a communication method by combining signals carried over a twisted pair, converting the combined signal to an optical signal and sending out.

### SUMMARY

Embodiments of the present invention provide a method and system of data transmission, which can reduce cost of the system and allow subscribers to benefit various services with a lower price.

According to an embodiment of the present invention, a system of data transmission includes a first optical-electrical conversion module and a second optical-electrical conversion module.
The first optical-electrical conversion module includes a first optical transceiver module and the second optical-electrical conversion module includes a second optical transceiver module. The first optical transceiver module is connected with the second optical transceiver module through a fiber.
The first optical-electrical conversion module includes a mixing unit, configured to perform Frequency Division Multiplex on received xDSL signals and wireless signals and output mixed electrical signals to the first optical transceiver module. The first optical transceiver module performs electrical-optical conversion on the received electrical signal and transmits the optical signal obtained through the electrical-optical conversion to the second optical transceiver module through the fiber. The second optical transceiver module performs optical-electrical conversion on the received optical signal, separates the xDSL signals and wireless signals and transmits the xDSL signals and wireless signals respectively.

According to an embodiment of the present invention, a method of data transmission includes: mixing modulated xDSL signals and wireless baseband signals to obtain mixed electrical signals; performing electrical-optical conversion on the mixed electrical signal, and transmitting converted optical signals to a remote terminal through a fiber; and performing optical-electrical conversion, by the remote terminal on the received optical signal, and separating the xDSL signals and wireless signals.

According to the technical solutions provided in embodiments of the present invention, optical accessing network is utilized to provide xDSL services and wireless services simultaneously, that is, to implement transmission of two types of services with a same network. These technical solutions meet the requirements of different subscribers, and also reduce cost of the whole system.

### BRIEF DESCRIPTION OF THE DRAWING(S)

Fig 1 is a diagram of system architecture of xDSL in the conventional art;

Fig 2 is a schematic view of carrying xDSL services by using a fiber in the conventional art;

Fig 3 is a schematic view of a data transmission system according to an embodiment of the present invention; and

Fig 4 is a frequency spectrum of mixed electrical signals according to an embodiment of the present invention.

### DETAILED DESCRIPTION

Because both xDSL services and wireless services are transmitted through a fiber and they both involve analogue signal processing, transmission of xDSL services and wireless services is implemented in a same system, which is the main concept of the present invention.

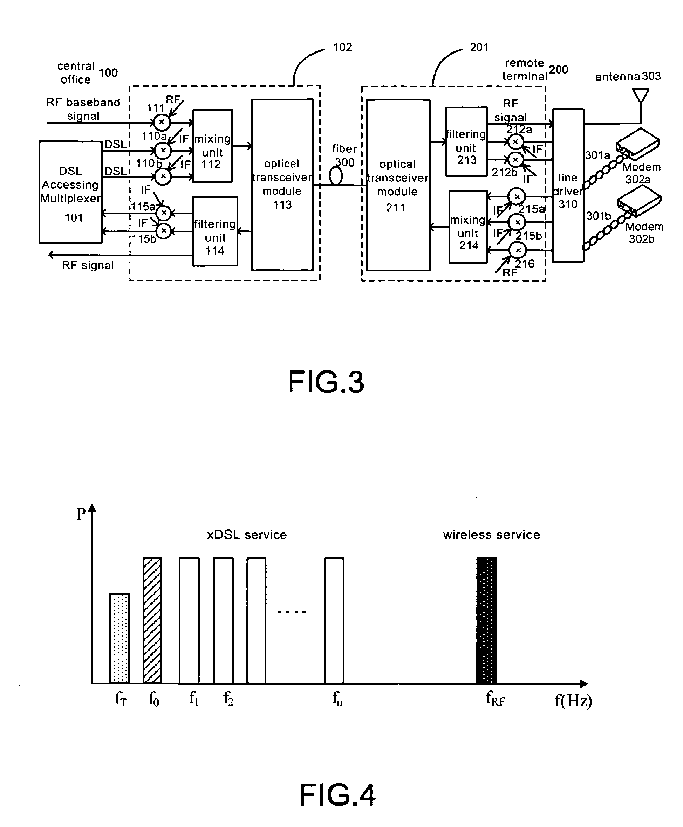

Referring to Fig 3, according to an embodiment, a data transmission system includes a DSLAM 101, optical-electrical conversion modules 102 and 201. The optical-electrical conversion module 102 is located at a Central Office CO100, the optical-electrical conversion module 201 is located at a remote terminal RT200. The optical-electrical conversion module 102 is connected to the optical-electrical conversion module 201 through a fiber 300.

The optical-electrical conversion module 102 includes an xDSL signal up-converter 110, a wireless baseband signal up-converter 111, a mixing unit 112, a filtering unit 114, a demodulator 115 and an optical transceiver module 113. The number of the xDSL signal up-converter s 110 varies according to the number of the multiplex xDSL signals transmitted by the DSLAM 101. The optical-electrical conversion module 201 includes a filtering unit 213, a mixing unit 214, an xDSL signal up-converter 215, a wireless baseband signal up-converter 216, a demodulator 212 and an optical transceiver module 211.

Both xDSL signals and wireless signals in the present invention are modulated by Sub-Carrier Multiplexing (SCM).

In downstream direction, the DSLAM 101 of the Central Office CO100 generates multiplex xDSL signals and transmits them to the up-converter 110. At the up-converter 110, the multiplex xDSL signals from the DSLAM 101 are mixed respectively with intermediate frequency local oscillator signals (IF) which have different frequencies, the IF signals are used as sub-carriers. From a frequency domain perspective, the multiplex xDSL signals are up-converted to different IFs, such as 100MHz, 200MHz, ..., IGHz. At the up-converter 111, the wireless baseband signals are mixed respectively with radio frequency local oscillator signals (RF), the RF signals are used as sub-carriers. From a frequency domain perspective, the wireless baseband signals are up-converted to RF, such as 2.4GHz.

The xDSL signals and wireless signals that are modulated by SCM are processed by Frequency Division Multiplexing (FDM) at the mixing unit 112, and mixed electrical signals are outputted, the frequency spectrum of the electrical signals are shown in Fig 4. In Fig 4, f_{I}-fₙ are frequency spectrums of xDSL service data after SCM; f_{RF} at the high frequency part is a frequency spectrum of wireless service data; f_{T} is a low frequency data, which may carry control information and clock information.

The optical transceiver module 113 performs electrical-optical conversion on the received mixed electrical signals. For example, a laser can be used to convert the mixed electrical signals to THz optical signals directly, that is, bias current of the laser is modulated to implement direct modulation. Or, a laser can be used to generate a continuous light source, and the mixed electrical signals perform external modulation on the light source by using a Mach Zehnder Modulator (MZM).

A fiber 300 with large capacity and low loss transfers the modulated optical signals to a remote terminal (RT200) which is located several kilometers away. The optical transceiver module 211 processes the optical signals, converts them into the electrical signals, splits high frequency wireless signals and each xDSL signals through the filtering unit 213 and transmits the wireless signals though an antenna 303. Low frequency multiplex xDSL signals and their corresponding sub-carrier signals are processed by the demodulator 212 and down-converts to baseband, and original multiplex xDSL signals are restored and are transferred to the user terminals 302 through Twisted Pairs 301.

On uplink direction, signals are transmitted according to a reverse order of the process mentioned above.

According to embodiments of the present invention, xDSL services and wireless services can be provided simultaneously on a same optical accessing network. Multiplex xDSL signals and wireless signals share a same optical transmission device, such as a laser, thus system cost is reduced, and various services are provided to different subscribers.

According to an embodiment of the present invention, a data transmission method includes :performing mixing on modulated xDSL signals and wireless baseband signals to obtain mixed electrical signals; performing electrical-optical conversion on the mixed electrical signal, and transmitting converted optical signals to a remote terminal through a fiber; and performing optical-electrical conversion, by the remote terminal on the received optical signal, and separating the restored xDSL signals and wireless signals.

The method further includes: modulating the xDSL signals and wireless baseband signals using sub-carriers with different frequencies before performing mixing on modulated xDSL signals and wireless baseband signals. The xDSL signals and wireless baseband signals are modulated in a Sub-Carrier Multiplexing (SCM) manner.

Modulating the xDSL signals includes: mixing xDSL signals with intermediate frequency local oscillator signals (IF), and up-converting the xDSL signals to a frequency at a first frequency band by using the IF signals as the sub-carriers; and/or

Modulating the wireless baseband signals includes: mixing wireless baseband signals with radio frequency local oscillator signals (RF), and up-converting the wireless baseband signals to a frequency at a second frequency band by using the RF signals as the sub-carriers.

The remote terminal performing optical-electrical conversion on the received optical signal and separating the xDSL signals and wireless signals includes: mixing the separated xDSL signals with corresponding sub-carrier information, restoring original xDSL signals through demodulation, and transferring the original signals to user terminals through Twist Pairs; and separating the wireless signals by filtering and transmitting the wireless signals through an antenna.

The above embodiments are merely used to illustrate the present invention but not to limit the present invention. Any modification, equivalent substitution, or improvement within the principal of the present invention shall be regarded as within the range of the present invention.

## Claims

1. A system of data transmission, comprising a first optical-electrical conversion module (102) and a second optical-electrical conversion module (201), the first optical-electrical conversion module (102) comprising a first optical transceiver module (113), the second optical-electrical conversion module (201) comprising a second optical transceiver module (211), the first optical transceiver module (113) being connected with the second optical transceiver module (211) through a fiber (300), **characterized in that**,
the first optical-electrical conversion module (102) comprises a mixing unit (112), configured to perform Frequency Division Multiplexing on received xDSL signals and wireless signals, and output mixed electrical signals to the first optical transceiver module (113), wherein the first optical transceiver module (113) performs an electrical-optical conversion on the received electrical signal and transmits the optical signal to the second optical transceiver module (211) through the fiber (300), and the second optical transceiver module performs an optical-electrical conversion on the received optical signal, seperates the xDSL signals and wireless signals and transmits the xDSL signals and wireless signals respectively.

2. The system of claim 1, **characterized in that**, the first optical-electrical conversion module (102) comprises a first up-converter (110) and a second up-converter (111), wherein the first up-converter (110) and the second up-converter (111) performs modulation and multiplexing on the received xDSL signals and wireless signals respectively in a Sub-Carrier Multiplexing manner.

3. The system of claim 1 or 2, **characterized in that**, the first up-converter (110) respectively mixes the received multiplex xDSL signals with intermediate frequency local oscillator signals IF having different frequencies, uses IF signals as sub-carriers to up-convert the xDSL signals to different IFs, and transmits the xDSL signals to the mixing unit (112); and
the second up-converter (111) mixes the wireless signals with radio frequency local oscillator signals RF, uses RF signals as sub-carriers to up-convert the wireless signals to RF, and transmits the wireless signals to the mixing unit (112).

4. The system of claim 3, **characterized in that**, the mixed electrical signals comprise a reference carrier signal that carries sub-carrier information for mixing.

5. The system of claim 4, **characterized in that**, the second optical-electrical conversion module (201) comprises a filtering unit (213), wherein xDSL signals separated by the filtering unit (213) are mixed with corresponding sub-carrier signals at the demodulator (212) to restore original xDSL signals, wireless signals are separated by filtering.

6. A method of data transmission, **characterized in** comprising:
performing frequency division multiplexing on modulated xDSL signals and wireless baseband signals to obtain mixed electrical signals;
performing optical-electrical conversion on the mixed electrical signal, and transmitting the converted optical signals to a remote terminal through a fiber; and
performing optical-electrical conversion, by the remote terminal on the received optical signal, and separating the xDSL signals and wireless signals.

7. The method of claim 6, **characterized in** further comprising: modulating the xDSL signals and wireless baseband signals using sub-carriers with different frequencies before performing frequency division multiplexing on the modulated xDSL signals and wireless baseband signals.

8. The method of claim 6, **characterized in that**: the xDSL signals and wireless baseband signals are mixed by Sub-Carrier Multiplexing.

9. The method of claim 8, **characterized in that**,
modulating the xDSL signals comprises:
mixing xDSL signals with intermediate frequency local oscillator signals IF, and up-converting the xDSL signals to a frequency at a first frequency band by using the IF signals as the sub-carriers; and
modulating the wireless baseband signals comprises:
mixing wireless baseband signals with radio frequency local oscillator signals RF, and up-converting the wireless baseband signals to a frequency at a second frequency band by using the RF signals as the sub-carriers.

10. The method of claim 9, **characterized in that**, the remote terminal performing optical-electrical conversion on the received optical signal and separating the xDSL signals and wireless signals comprises:
mixing the separated xDSL signals with corresponding sub-carrier information to restorie original xDSL signals through demodulation, and transferring the original signals to user terminals through Twist Pairs; and
separating the wireless signals by filtering and transmitting the wireless signals through an antenna.

## Patentansprüche

1. System zur Datenübertragung mit einem ersten Optisch-elektrisch-Umsetzungsmodul (102) und einem zweiten Optisch-elektrisch-Umsetzungsmodul (201), wobei das erste Optisch-elektrisch-Umsetzungsmodul (102) ein erstes optisches Sender-/Empfängermodul (113) umfasst, das zweite Optisch-elektrisch-Umsetzungsmodul (201) ein zweites optisches Sender-/Empfängermodul (211) umfasst und das erste optische Sender-/Empfängermodul (113) durch eine Faser (300) mit dem zweiten optischen Sender-/Empfängermodul (211) verbunden ist, **dadurch gekennzeichnet, dass**
das erste Optisch-elektrisch-Umsetzungsmodul (102) eine Mischeinheit (112) umfasst, die dafür ausgelegt ist, Frequenzmultiplexen an empfangenen xDSL-Signalen und drahtlosen Signalen auszuführen und gemischte elektrische Signale an das erste optische Sender-/Empfängermodul (113) auszugeben, wobei das erste optische Sender-/Empfängermodul (113) eine optisch-elektrisch-Umsetzung an dem empfangenen elektrischen Signal ausführt und das optische Signal durch die Faser (300) zu dem zweiten optischen Sender-/Empfängermodul (211) überträgt und das zweite optische Sender-/Empfängermodul eine optisch-elektrisch-Umsetzung an dem empfangenen optischen Signal ausführt, die xDSL-Signale und drahtlosen Signale trennt und die xDSL-Signale bzw. drahtlosen Signale überträgt.

2. System nach Anspruch 1, **dadurch gekennzeichnet, dass** das erste Optisch-elektrisch-Umsetzungsmodul (102) einen ersten Aufwärtsumsetzer (110) und einen zweiten Aufwärtsumsetzer (111) umfasst, wobei der erste Aufwärtsumsetzer (110) und der zweite Aufwärtsumsetzer (111) Modulation und Multiplexen an den empfangenen xDSL-Signalen bzw. drahtlosen Signalen auf eine Weise des Zwischenträgermultiplexens ausführt.

3. System nach Anspruch 1 oder 2, **dadurch gekennzeichnet, dass** der erste Aufwärtsumsetzer (110) jeweils die empfangenen Multiplex-xDSL-Signale mit Zwischenfrequenz-Lokaloszillator-Signalen ZF, die verschiedene Frequenzen aufweisen, mischt, ZF-Signale als Zwischenträger zum Aufwärtsumsetzen der xDSL-Signale auf verschiedene ZF verwendet und die xDSL-Signale zu der Mischeinheit (112) überträgt; und der zweite Aufwärtsumsetzer (111) die drahtlosen Signale mit Hochfrequenz-Lokaloszillator-Signalen HF mischt, HF-Signale als Zwischenträger zum Aufwärtsumsetzen der drahtlosen Signale auf HF verwendet und die drahtlosen Signale zu der Mischeinheit (112) überträgt.

4. System nach Anspruch 3, **dadurch gekennzeichnet, dass** die gemischten elektrischen Signale ein Referenzträgersignal umfassen, das Zwischenträgerinformationen zum Mischen trägt.

5. System nach Anspruch 4, **dadurch gekennzeichnet, dass** das zweite Optisch-elektrisch-Umsetzungsmodul (201) eine Filtereinheit (213) umfasst, wobei durch die Filtereinheit (213) getrennte xDSL-Signale in dem Demodulator (212) mit entsprechenden Zwischenträgersignalen gemischt werden, um ursprüngliche xDSL-Signale wiederherzustellen, wobei drahtlose Signale durch Filterung getrennt werden.

6. Verfahren zur Datenübertragung, **gekennzeichnet durch** die folgenden Schritte:
Ausführen von Frequenzmultiplexen an modulierten xDSL-Signalen und drahtlosen Basisbandsignalen, um gemischte elektrische Signale zu erhalten;
Ausführen von optisch-elektrisch-Umsetzung an dem gemischten elektrischen Signal und Übertragen der umgesetzten optischen Signale zu einem entfernten Endgerät durch eine Faser; und
Ausführen von optisch-elektrisch-Umsetzung an dem empfangenen optischen Signal durch das entfernte Endgerät und Trennen der xDSL-Signale und drahtlosen Signale.

7. Verfahren nach Anspruch 6, **dadurch gekennzeichnet, dass** es ferner Folgendes umfasst:
Modulieren der xDSL-Signale und drahtlosen Basisbandsignale unter Verwendung von Zwischenträgern mit verschiedenen Frequenzen vor dem Ausführen von Frequenzmultiplexen an den modulierten xDSL-Signalen und drahtlosen Basisbandsignalen.

8. Verfahren nach Anspruch 6, **dadurch gekennzeichnet, dass** die xDSL-Signale und drahtlosen Basisbandsignale durch Zwischenträgermultiplexen gemischt werden.

9. Verfahren nach Anspruch 8, **dadurch gekennzeichnet, dass** das Modulieren der xDSL-Signale Folgendes umfasst:
Mischen von xDSL-Signalen mit Zwischenfrequenz-Lokaloszillator-Signalen ZF und
Aufwärtsumsetzen der xDSL-Signale auf eine Frequenz in einem ersten Frequenzband durch Verwendung der ZF-Signale als die Zwischenträger; und
das Modulieren der drahtlosen Basisbandsignale Folgendes umfasst:
Mischen von drahtlosen Basisbandsignalen mit Hochfrequenz-Lokaloszillator-Signalen HF und Aufwärtsumsetzen der drahtlosen Basisbandsignale auf eine Frequenz in einem zweiten Frequenzband durch Verwendung der HF-Signale als die Zwischenträger.

10. Verfahren nach Anspruch 9, **dadurch gekennzeichnet, dass** das Ausführen von optisch-elektrisch-Umsetzung durch das entfernte Endgerät an dem empfangenen optischen Signal und das Trennen der xDSL-Signale und drahtlosen Signale Folgendes umfasst:
Mischen der getrennten xDSL-Signale mit entsprechenden Zwischenträgerinformationen, um durch Demodulation ursprüngliche xDSL-Signale wiederherzustellen, und Transferieren der ursprünglichen Signale zu Benutzerendgeräten durch verdrillte Doppelleitungen; und
Trennen der drahtlosen Signale durch Filtern und Übertragen der drahtlosen Signale durch eine Antenne.

## Revendications

1. Système de transmission de données, comprenant un premier module de conversion optique-électrique (102) et un second module de conversion optique-électrique (201), le premier module de conversion optique-électrique (102) comprenant un premier module d'émetteur-récepteur optique (113), le second module de conversion optique-électrique (201) comprenant un second module d'émetteur-récepteur optique (211), le premier module d'émetteur-récepteur optique (113) étant connecté au second module d'émetteur-récepteur optique (211) par le biais d'une fibre (300), **caractérisé en ce que** le premier module de conversion optique-électrique (102) comprend une unité de mixage (112), configurée pour effectuer un Multiplexage par Répartition de Fréquence sur des signaux xDSL et des signaux sans fil reçus, et produire en sortie des signaux électriques mixtes allant au premier module d'émetteur-récepteur optique (113), le premier module d'émetteur-récepteur optique (113) effectuant une conversion électrique-optique sur le signal électrique reçu et transmettant le signal optique au second module d'émetteur-récepteur optique (211) par le biais de la fibre (300), et le second d'émetteur-récepteur optique effectuant une conversion optique-électrique sur le signal optique reçu, séparant les signaux xDSL et les signaux sans fil, et transmettant les signaux xDSL et les signaux sans fil respectivement.

2. Système selon la revendication 1, **caractérisé en ce que** le premier module de conversion optique-électrique (102) comprend un premier convertisseur élévateur de fréquence (110) et un second convertisseur élévateur de fréquence (111), le premier convertisseur élévateur de fréquence (110) et le second convertisseur élévateur de fréquence (111) effectuant une modulation et un multiplexage sur les signaux xDSL et les signaux sans fil reçus respectivement par Multiplexage de Sous-Porteuses.

3. Système selon la revendication 1 ou 2, **caractérisé en ce que** le premier convertisseur élévateur de fréquence (110) mélange respectivement les signaux xDSL multiplexés reçus à des signaux d'oscillateur local de fréquence intermédiaire IF de fréquences différentes, utilise les signaux IF comme sous-porteuses afin de convertir par élévation de fréquence les signaux xDSL en différentes IF, et transmet les signaux xDSL à l'unité de mixage (112) ; et
le second convertisseur élévateur de fréquence (111) mélange les signaux sans fil à des signaux d'oscillateur local de fréquence radioélectrique RF, utilise les signaux RF comme sous-porteuses afin de convertir par élévation de fréquence les signaux sans fil en RF, et transmet les signaux sans fil à l'unité de mixage (112).

4. Système selon la revendication 3, **caractérisé en ce que** les signaux électriques mixtes comprennent un signal de porteuse de référence qui porte des informations de sous-porteuse en vue du mixage.

5. Système selon la revendication 4, **caractérisé en ce que** le second module de conversion optique-électrique (201) comprend une unité de filtrage (213), les signaux xDSL séparés par l'unité de filtrage (213) étant mélangés à des signaux de sous-porteuses correspondants au niveau du démodulateur (212) afin de restaurer les signaux xDSL d'origine, les signaux sans fil étant séparés par filtrage.

6. Procédé de transmission de données, **caractérisé en ce qu'**il comprend :
l'exécution d'un multiplexage par répartition de fréquence sur des signaux xDSL et des signaux en bande de base sans fil modulés afin d'obtenir des signaux électriques mixtes ;
l'exécution d'une conversion optique-électrique sur le signal électrique mixte, et la transmission des signaux optiques convertis à un terminal distant par le biais d'une fibre ; et
l'exécution d'une conversion optique-électrique par le terminal distant sur le signal optique reçu, et la séparation des signaux xDSL et des signaux sans fil.

7. Procédé selon la revendication 6, **caractérisé en ce qu'**il comprend en outre : la modulation des signaux xDSL et des signaux en bande de base sans fil au moyen de sous-porteuses de fréquences différentes avant d'effectuer le multiplexage par répartition de fréquence sur les signaux xDSL et les signaux en bande de base sans fil modulés.

8. Procédé selon la revendication 6, **caractérisé en ce que** les signaux xDSL et les signaux en bande de base sans fil sont mélangés par Multiplexage de Sous-Porteuses.

9. Procédé selon la revendication 8, **caractérisé en ce que**
la modulation des signaux xDSL comprend :
le mixage des signaux xDSL à des signaux d'oscillateur local de fréquence intermédiaire IF, et la conversion par élévation de fréquence des signaux xDSL en une fréquence à une première bande de fréquences en utilisant les signaux IF comme sous-porteuses ; et
la modulation des signaux en bande de base sans fil comprend :
le mixage des signaux en bande de base sans fil à des signaux d'oscillateur local de fréquence radioélectrique RF, et la conversion par élévation de fréquence des signaux en bande de base sans fil en une fréquence à une seconde bande de fréquences en utilisant les signaux RF comme sous-porteuses.

10. Procédé selon la revendication 9, **caractérisé en ce que** l'exécution par le terminal distant de la conversion optique-électrique sur le signal optique reçu et de la séparation des signaux xDSL et des signaux sans fil comprend :
le mixage des signaux xDSL séparés à des informations de sous-porteuses correspondantes afin de restaurer les signaux xDSL d'origine par démodulation, et le transfert des signaux d'origine à des terminaux utilisateurs par le biais de Paires Torsadées ; et
la séparation des signaux sans fil par filtrage et la transmission des signaux sans fil par le biais d'une antenne.
